Europäisches Patentamt

European Patent Office

Office européen des brevets

(19)

(11) Numéro de publication: **0 192 497**
**B1**

(12) **FASCICULE DE BREVET EUROPEEN**

(45) Date de publication du fascicule du brevet: **11.07.90**

(51) Int. Cl.⁵: **H 04 N 9/69, H 04 N 9/77**

(21) Numéro de dépôt: **86400008.8**

(22) Date de dépôt: **03.01.86**

(54) Dispositif pour réduire la dynamique de trois signaux de couleur représentant une image.

(30) Priorité: **08.01.85 FR 8500182**

(43) Date de publication de la demande:
**27.08.86 Bulletin 86/35**

(45) Mention de la délivrance du brevet:
**11.07.90 Bulletin 90/28**

(84) Etats contractants désignés:
**DE GB NL**

(56) Documents cités:
**EP-A-0 067 083**
**US-A-3 684 825**

(73) Titulaire: **THOMSON VIDEO EQUIPEMENT**
**94, rue du Fossé Blanc**
**F-92230 Gennevilliers (FR)**

(72) Inventeur: **Soca, Serge**
**THOMSON-CSF SCPI 173, bld Haussmann**
**F-75379 Paris Cedex 08 (FR)**

(74) Mandataire: **Turlèque, Clotilde et al**
**THOMSON-CSF SCPI**
**F-92045 PARIS LA DEFENSE CEDEX 67 (FR)**

EP 0 192 497 B1

Courier Press, Leamington Spa, England.

## Description

L'invention concerne un dispositif pour réduire la dynamique de trois signaux de couleur représentant une image, ces trois signaux étant fournis par une source quelconque: caméra, télécinéma, etc. Ces signaux ont une dynamique supérieure à celle qui est acceptable par les moyens de transmission ou d'enregistrement utilisés couramment. Pour restituer une image correcte il est nécessaire de réduire la dynamique de ces signaux avant leur transmission ou leur enregistrement afin que leurs valeurs ne dépassent jamais une valeur maximale fixée. Les valeurs de très forte amplitude étant peu nombreuses statistiquement, elles sont sacrifiées au profit des valeurs moyennes et des valeurs faibles qui permettent de reconstituer les informations essentielles de l'image. Pour ne pas perdre totalement les informations correspondant aux crêtes de ces signaux, celles-ci ne sont pas écrêtées mais seulement comprimées.

Pour réaliser une réduction de la dynamique par une compression des valeurs les plus élevées, il est connu d'utiliser trois quadripôles non-linéaires et identiques, traitant respectivement les trois signaux de couleur. Leur fonction de transfert a un graphe constitué de deux segments de droite. Un premier segment, correspondant aux valeurs faibles et moyennes, a une pente unitaire. Un second segment, correspondant aux valeurs élevées, a une pente inférieure à l'unité. La valeur à laquelle commence la compression et la valeur de la pente du second segment sont réglables.

Lorsque les trois signaux de couleur représentent des éléments d'image qui sont achromes, les trois signaux de couleur ont la même valeur. Par conséquent, les signaux restitués par les trois quadripôles ont la même valeur et les éléments de l'image reconstituée restent achromes. Par contre, les signaux de couleur correspondant à des éléments colorés n'ont pas la même valeur et leurs différences de valeur sont réduites lorsque ces valeurs sont suffisamment élevées pour que les quadripôles réalisent une compression. Les valeurs de ces trois signaux tendent alors à devenir égales à la sortie des quadripôles, et les éléments d'image restitués tendent donc à devenir achromes. Ce phénomène est d'autant plus sensible que les couleurs sont moins saturées: teinte chair, ciel bleu, teinte pastel, etc....

Un dispositif qui ne présente pas cet inconvénient car il restitue trois signaux de couleur dont la valeur est multipliée par un même coefficient afin de conserver les rapports existant entre les valeurs des trois signaux de couleur avant leur compression est décrit dans le brevet US—A—3684825.

Mais dans ce dispositif, les trois signaux de couleur transitent par un multiplieur ce qui introduit de la distorsion, même en l'absence de correction.

L'invention a pour objet un dispositif pour réduire la dynamique des trois signaux de couleur représentant une image, qui ne présente pas cet inconvénient.

Selon l'invention un dispositif pour réduire la dynamique de trois signaux de couleur représentant une image, comportant des moyens pour fournir à chaque instant un signal de correction dont la valeur est une fonction non-linéaire prédéterminée de la valeur Vm du signal de couleur ayant la plus grande valeur à l'instant considéré, et des moyens de calcul recevant le signal de correction et les trois signaux de couleur pour fournir trois signaux de couleur ayant une dynamique réduite est caractérisé en ce que les moyens de calcul comportent:

— trois multiplicateurs recevant respectivement trois signaux sur des premières entrées, recevant le signal de correction sur des secondes entrées, et fournissant respectivement trois signaux de correction de couleurs sur trois sorties;

— trois soustracteurs recevant respectivement sur trois premières entrées les signaux de couleur dont la dynamique est à réduire, recevant respectivement sur trois secondes entrées les trois signaux de correction de couleurs fournis par les multiplicateurs, et fournissant respectivement trois signaux de couleur dont la dynamique est réduite, sur trois sorties constituant des sorties du dispositif.

L'invention sera mieux comprise et d'autres détails apparaîtront à l'aide de la description ci-dessous et des figures l'accompagnant:

— la figure 1, 2 et 4 représentent le schéma synoptique d'un exemple de réalisation de trois variantes de dispositifs connus;

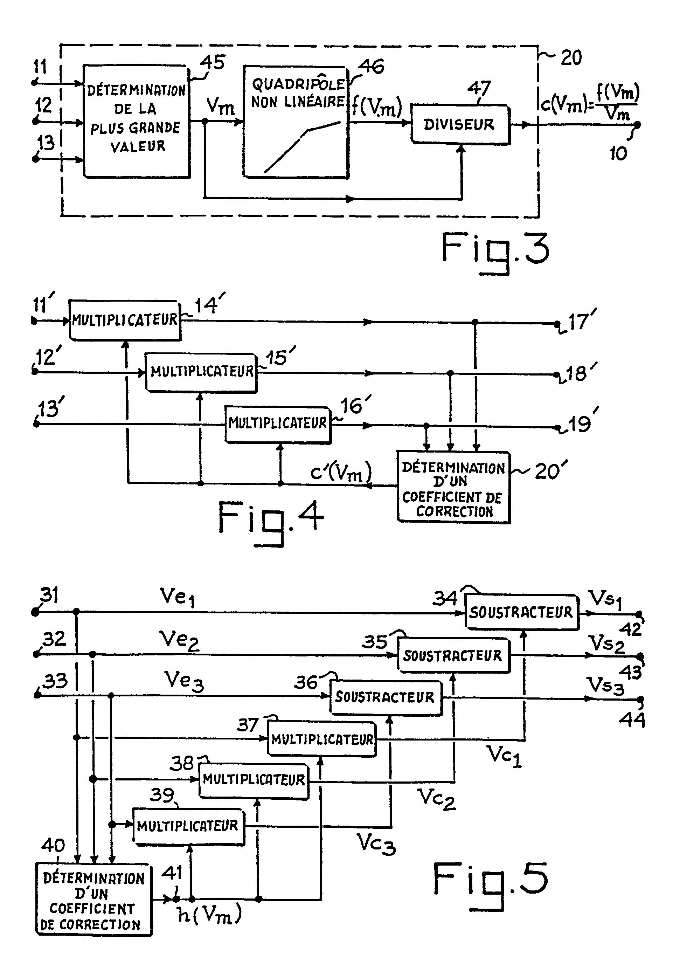

— le figure 3 représente le schéma synoptique plus détaillé d'une partie de l'une de ces trois variantes;

— les figures 5 et 11 représentent le schéma synoptique d'un exemple de réalisation de deux variantes du dispositif selon l'invention;

— les figures 6 et 9 représentent le schéma synoptique plus détaillé de certaines parties de ces deux variantes;

— les figures 7, 8 et 10 représentent des graphes illustrant le fonctionnement de l'une de ces deux variantes.

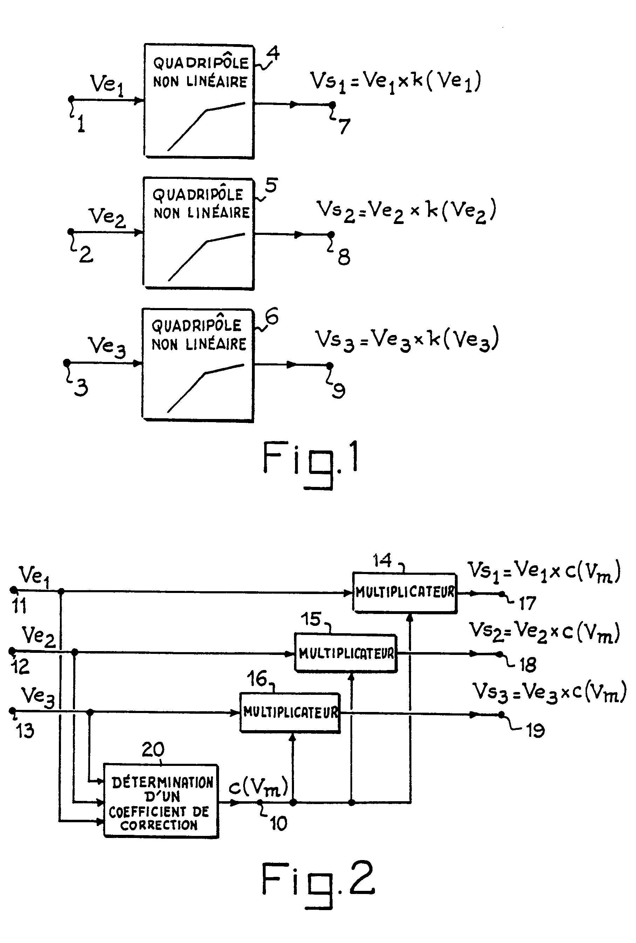

Le schéma représenté sur la figure 1 correspond à un dispositif de l'art antérieur; il comprend trois quadripôles non-linéaires identiques, 4 à 6, recevant trois signaux de couleur respectivement sur trois bornes d'entrée 1 à 3, et restituant respectivement trois signaux de couleur dont la dynamique est réduite, sur trois bornes de sortie 7 à 9. Les trois signaux de couleur dont la dynamique est à réduire ont respectivement pour valeur instantanée $Ve_1$, $Ve_2$ et $Ve_3$. Les trois signaux de couleur dont la dynamique a été réduite ont respectivement pour valeurs, au même instant, $Vs_1$, $Vs_2$, $Vs_3$. Les valeurs des signaux restitués sont liées aux valeurs des signaux appliqués sur les bornes d'entrée par les relations:

$$Vs_1 = Ve_1 \times k(Ve_1)$$
$$Vs_2 = Ve_2 \times k(Ve_2)$$
$$Vs_3 = Ve_3 \times k(Ve_3)$$

Le rapport k entre la valeur du signal à l'entrée et la valeur du signal à la sortie de chaque quadripôle dépend de la valeur du signal à l'entrée. k est égal à 1 lorsque la valeur du signal à l'entrée est inférieure à une valeur fixée qui est identique pour les trois quadripôles, et est inférieure à 1 pour les valeurs du signal d'entrée qui sont supérieures à la valeur de ce seuil. Les valeurs des trois signaux d'entrée n'étant pas identiques, les valeurs de k à un instant donné sont en général différentes. Lorsque tous les signaux d'entrée ont une valeur inférieure à la valeur du seuil, la valeur de k est égale à 1 pour tous les signaux, les rapports entre les valeurs des signaux à l'entrée sont conservées, par conséquent les couleurs des éléments d'image correspondants sont conservées. Par contre, lorsqu'un ou deux des signaux d'entrée a une valeur supérieure au seuil, les valeurs de k ne sont plus identiques pour les trois signaux, par conséquent les rapports entre les valeurs des signaux de sortie ne sont pas identiques aux rapports entre les valeurs des signaux d'entrée. Les couleurs des éléments d'image correspondants sont altérées.

La figure 2 représente le schéma synoptique d'un dispositif plus perfectionné selon l'art antérieur. Cet exemple comporte trois multiplicateurs analogiques, 14 à 16; et un dispositif 20 de détermination d'un coefficient de correction c(Vm). Trois signaux de couleur dont la dynamique est à réduire sont appliqués respectivement à trois bornes d'entrée, 11 à 13, et ont pour valeur respectivement: $Ve_1$, $Ve_2$ et $Ve_3$. Ils sont transmis respectivement à des premières entrées des multiplicateurs 14 à 16 et à trois entrées du dispositif 20. Le dispositif 20 fournit un signal de valeur c(Vm) sur une borne de sortie 10 qui est reliée à des secondes entrées des multiplicateurs 14 à 16. Les multiplicateurs 14 à 16 ont des sorties reliées respectivement à trois bornes de sortie, 17 à 19, du dispositif selon l'invention. Ces bornes de sortie fournissent respectivement trois signaux de couleur dont la dynamique est réduite et qui ont pour valeurs:

$$Vs_1 = Ve_1 \times c(Vm)$$
$$Vs_2 = Ve_2 \times c(Vm)$$
$$Vs_3 = Ve_3 \times c(Vm)$$

Ce dispositif réalise donc la multiplication de chacun des trois signaux de couleur par une même valeur de coefficient de correction c(Vm). Ce coefficient est fonction de la valeur Vm qui est la valeur la plus grande, à un instant considéré, parmi les trois valeurs des signaux de couleur. Lorsque cette valeur Vm est inférieure à un seuil fixé, la valeur c(Vm) est égale à 1, et lorsque la valeur Vm est supérieure au seuil fixé, la valeur c(Vm) est inférieure à 1 pour obtenir une compression. Les valeurs des trois signaux de couleur étant multipliées par une même valeur, leurs rapports sont donc conservés et les couleurs des éléments d'image correspondants ne sont pas altérées.

La figure 3 représente un schéma synoptique plus détaillé du dispositif 20 de détermination d'un coefficient de correction c(Vm). Il comporte: un dispositif 45 de détermination de la plus grande valeur; un quadripôle non-linéaire 46; et un diviseur analogique 47. Les trois entrées du dispositif 20 sont reliées à trois entrées du dispositif 45 et celui-ci possède une sortie reliée à une entrée du quadripôle 46 et à une première entrée du diviseur 47. Une seconde entrée du diviseur 47 est reliée à une sortie du quadripôle 46 et une sortie du diviseur 47 constitue la sortie du dispositif 20 et est reliée à la borne de sortie 10.

La sortie du dispositif 45 de détermination de la plus grande valeur fournit un signal de valeur Vm à l'entrée du quadripôle 46. Celui-ci réalise une transmission de gain unité, ou une compression, et restitue un signal de valeur f(Vm). Le diviseur 47 fournit un signal de valeur

$$c(Vm) = \frac{f(Vm)}{Vm}$$

qui permet de piloter l'opération de compression de l'ensemble des trois signaux de couleur, en fonction de la compression à obtenir sur le signal de couleur qui, à l'instant considéré, nécessite le plus d'être comprimé.

Le dispositif 45 peut être constitué par une combinaison de trois diodes couplées par leurs cathodes. Les trois signaux de couleurs sont appliquées respectivement aux trois anodes. La diode dont l'anode est la plus positive, est la seule qui conduit. Le quadripôle non-linéaire 46 a une fonction de transfert dont le graphe est constitué de deux segments de droite: un premier segment ayant une pente unitaire et correspondant aux valeurs faibles et moyennes, et un second segment de pente inférieure à 1 et correspondant aux valeurs élevées.

La figure 4 représente le schéma synoptique d'un autre dispositif connu qui comporte les mêmes éléments que le dispositif précédent mais le dispositif 20' de détermination d'un coefficient de correction a ses trois entrées reliées non pas aux bornes d'entrée, 11' à 13', mais aux bornes de sortie, 17' à 19'. La détermination du signal de couleur ayant la valeur instantanée la plus grande est inchangée et la valeur c'(Vm) du signal de correction converge vers une valeur peu différente de c(Vm). L'effet de la compression est donc très semblable. C'est une réalisation de ce type qui est décrite dans le brevet US précité.

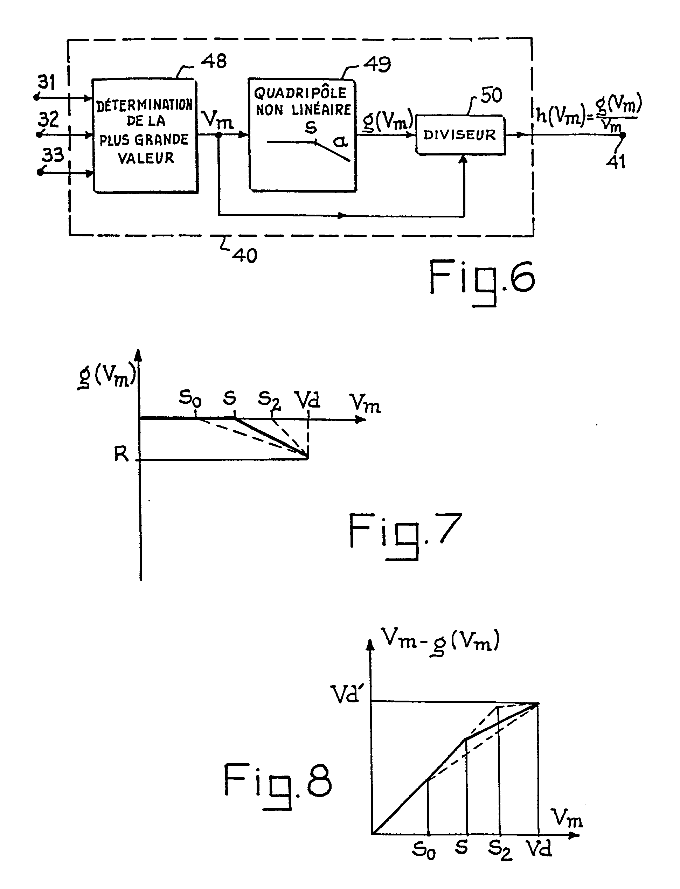

La figure 5 représente le schéma synoptique du dispositif selon l'invention. Dans ce dispositif les troi signaux de couleur sont traités non pas par des multiplicateurs mais par des soustracteurs et la valeur de chacun des signaux de couleur restitués est calculée par une fonction linéaire de la valeur du signal de couleur considéré et de la valeur h(Vm) d'un signal de correction. Ces soustracteurs reçoivent trois signaux de correction qui sont distincts et qui sont différents du signal de correction f(Vm) généré par les dispositifs 20 et 20' des dispositifs précédents; les valeurs $Vs_1$, $Vs_2$, $Vs_3$ des signaux de sortie sont encore reliées aux valeurs des signaux d'entrée par des relations de la forme:

$$Vs_1 = c(Vm) \cdot Ve_1$$
$$Vs_2 = c(Vm) \cdot Ve_2$$
$$Vs_3 = c(Vm) \cdot Ve_3$$

afin de conserver les rapports existant entre les signaux d'entrée.

Mais ce dispositif comporte: trois soustracteurs analogiques 34 à 36; trois multiplicateurs analogiques 37 à 39; et un dispositif 40 de détermination d'un coefficient de correction. Les soustracteurs 34 à 36 ont: des premières entrées reliées respectivement à trois bornes d'entrée 31 à 33 du dispositif selon l'invention; des secondes entrées reliées respectivement à des sorties des multiplicateurs 37 à 39; et des sorties reliées respectivement à trois bornes de sortie 42 à 44 du dispositif selon l'invention. Les multiplicateurs 37 à 39 ont des premières entrées reliées respectivement aux trois bornes d'entrée 31 à 33 et ont des secondes entrées reliées à une borne de sortie 41 du dispositif 40.

Le dispositif 40 possède trois entrées reliées respectivement aux trois bornes d'entrée 31 à 33. Le dispositif 40 génère un signal de valeur h(Vm) qui est transmis par sa borne de sortie 41 aux secondes entrées des multiplicateurs 37 à 39. Ces derniers fournissent alors trois signaux de correction ayant respectivement pour valeur:

$$Vc_1 = Ve_1 \times h(Vm)$$
$$Vc_2 = Ve_2 \times h(Vm)$$
$$Vc_3 = Ve_3 \times h(Vm)$$

Les soustracteurs 34 à 36 fournissent donc des signaux de couleur dont la dynamique est réduite, qui ont respectivement pour valeur:

$$Vs_1 = Ve_1 - Ve_1 \times h(Vm)$$
$$Vs_2 = Ve_2 - Ve_2 \times h(Vm)$$
$$Vs_3 = Ve_3 - Ve_3 \times h(Vm)$$

Il apparaît que la valeur de chacun des signaux de couleur est multipliée par le coefficient $1 - h(Vm)$, les rapports entre les valeurs de ces signaux sont donc conservés bien que l'opération principale réalisée sur ces signaux soit une soustraction et non pas une multiplication.

Les valeurs $Vc_1$, $Vc_2$, et $Vc_3$, des signaux de correction, sont en général plus faibles que les valeurs d'origine $Ve_1$, $Ve_2$, et $Ve_3$ des signaux de couleur. En particulier lorsqu'il n'y a pas de compression, les signaux de correction ont une valeur nulle. Par conséquent, lorsqu'il n'y a pas de compression les signaux de correction ne peuvent pas ajouter de distorsion aux signaux de couleur. D'autre part, les signaux de couleur transitant à travers les soustracteurs 34 à 36 sont moins distordus que les signaux de couleur transitant à travers des multiplicateurs tels que ceux utilisés dans les deux variantes décrites précédemment, car les soustracteurs analogiques sont en général plus linéaires que les multiplicateurs analogiques. Ce dispositif présente donc l'avantage de transmettre les signaux de couleur avec moins de distorsion.

La figure 6 représente le schéma synoptique d'un exemple de réalisation du dispositif 40 de détermination d'un coefficient de correction h(Vm). Le dispositif 40 comporte: un dispositif 48 de détermination de la plus grande valeur; un quadripôle non-linéaire 49; et un diviseur analogique 50. Le dispositif 48 possède trois entrées respectivement reliées aux trois entrées du dispositif 40 et une sortie reliée à une entrée du quadripôle 49 et à une première entrée du diviseur 50. Une seconde entrée du diviseur 50 est reliée à une sortie du quadripôle 49. Une sortie du diviseur 50 constitue la sortie du dispositif 40 et est reliée à la borne de sortie 41.

Le dispositif 48 sélectionne la valeur Vm qui est la plus grande parmi les valeurs des trois signaux de couleur d'entrée, et la transmet au quadripôle non-linéaire 49. Celui-ci restitue une valeur g(Vm) qui est fonction de la valeur Vm selon une loi non-linéaire dont le graphe comporte un premier segment de pente nulle et correspondant aux valeurs faibles et moyennes de Vm, et un second segment ayant une pente négative de valeur $a$ et correspondant aux valeurs élevées de Vm. La valeur S du seuil séparant les deux segments et la pente $a$ du second segment sont réglables par l'utilisateur du dispositif respectivement sur une plage $S_0$, $S_2$ et sur une plage $a_0$, $a_2$. Le diviseur 50 fournit un signal de correction de valeur

$$h(Vm) = \frac{g(Vm)}{Vm}$$

Lorsque Vm est inférieure au seuil S, le quadripôle 49 fournit un signal de valeur $g(Vm) = 0$. Le dispositif 40 fournit alors un signal de valeur $h(Vm) = 0$.

Lorsque Vm est supérieure au seuil S, le quadripôle 49 fournit un signal de valeur $g(Vm) = a \cdot (Vm - S)$. Le dispositif 40 fournit alors un signal de valeur:

$$h(Vm) = \frac{a \cdot (Vm - S)}{Vm}$$

Le soustracteur 34, ou 35, ou 36, correspondant au signal de couleur ayant la plus grande valeur Vm à l'instant considéré, fournit alors un signal de valeur: $Vm - Vm \cdot h(Vm)$ qui est encore égale à: $Vm - g(Vm)$.

La figure 7 représente le graphe de la fonction de transfert du quadripôle 49, en traits gras pour une valeur de seuil S et une valeur de pente $a$, et en traits pointillés pour des valeurs de seuil $S_0$ avec une pente $a_0$ et pour une valeur de seuil $S_2$ avec une valeur de pente $a_2$. La valeur de seuil et la valeur de pente associée sont choisies telles que pour une valeur de signal de couleur égale au maximum possible, Vd, la valeur du signal fourni par le quadripôle 49 est égale à une valeur R fixée et identique dans tous les cas. Cette valeur R correspond à la réduction de dynamique qui est nécessaire et qui est indépendante des réglages de *a* et de S réalisés par l'utilisateur. La valeur R de la réduction de la dynamique est imposée par les caractéristiques de la source des signaux de couleur et par les caractéristiques du système recevant les signaux après la réduction de dynamique. Par contre, le choix du seuil et de la pente est laissé à l'utilisateur du dispositif selon l'invention et il est effectué en fonction du résultat visuel obtenu.

La figure 8 représente le graphe de $Vm-g(Vm)$ en fonction de Vm, c'est-à-dire représente la courbe de transmission du dispositif selon l'invention pour le signal de couleur ayant la plus grande amplitude à l'instant considéré. Le graphe en trait gras correspond à une valeur de seuil S et à la pente de valeur *a* pour la quadripôle 49. Les graphes en pointillés correspondent à une valeur de seuil $S_0$ et à une pente de valeur $a_0$, d'une part, et, d'autre part, à une valeur de seuil $S_2$ et à une valeur de pente $a_2$. Dans ce dernier cas, le graphe comporte un segment de pente pratiquement nul dans la zone des valeurs élevées proches de la valeur maximale Vd. La valeur du signal restitué est alors sensiblement égale à $Vd'=Vd-R$ qui est déterminée par les caractéristiques des systèmes de transmission ou d'enregistrement situés en aval du dispositif selon l'invention. Il y a alors pratiquement un écrêtage des trois signaux de couleur. En réglant les valeurs S et *a*, l'utilisateur peut déplacer le graphe dans toute la zone délimitée par les pointillés.

La réalisation d'un quadripôle non-linéaire 49 dont le graphe comporte un segment de pente nulle et un segment de pente non nulle est plus facile que la réalisation du quadripôle non-linéaire 46 des variantes précédentes, en particulier si l'on souhaite pouvoir régler la valeur du seuil et de la pente. Pour permettre une utilisation facile du dispositif selon l'invention, il est souhaitable qu'une commande unique règle simultanément la valeur du seuil et la valeur de la pente tout en conservant la convergence des graphes au point d'abscisse Vd.

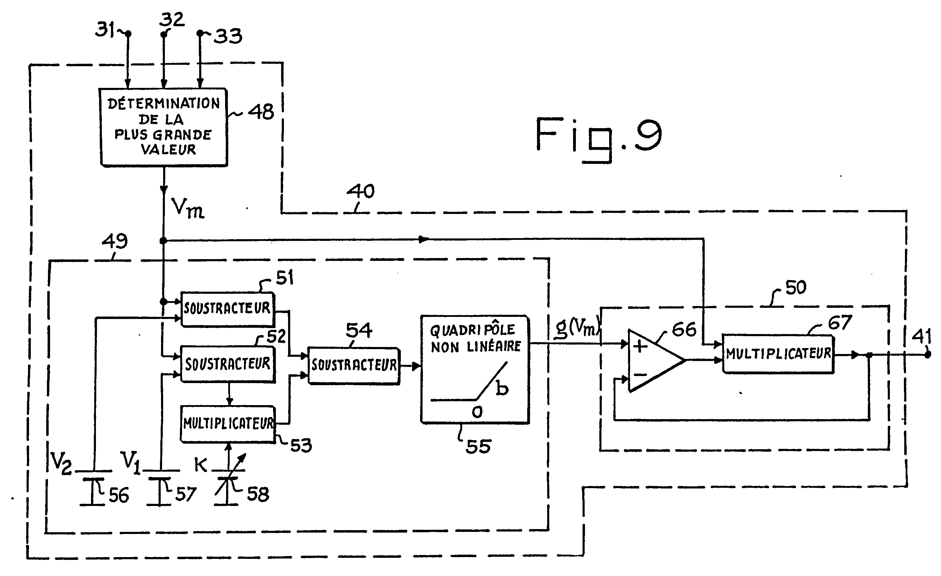

La figure 9 représente la schéma synoptique plus détaillé du dispositif 40 de détermination d'un coefficient de correction représenté sur la figure 6. Cet exemple de réalisation est représenté d'une manière plus détaillée que sur la figure 6 et il permet le réglage du seuil S et de la pente *a* par une commande unique. En outre, la figure 9 représente le schéma synoptique d'un exemple de réalisation du diviseur 50.

Le dispositif 40 comporte un dispositif 48 de détermination de la plus grande valeur Vm parmi les valeurs des signaux de couleur dont la dynamique est à réduire, un diviseur analogique 50, et un quadripôle non-linéaire 49. Ce dernier est constitué de: trois soustracteurs analogiques 51, 52, et 54; un multiplicateur analogique 53; deux générateurs 57 et 56 de tension fixe $V_1$ et $V_2$; un générateur 58 de tension réglable K; et en quadripôle non-linéaire à caractéristique fixe 55.

L'entrée du quadripôle 49 est reliée à des premières entrées des soustracteurs 51 et 52. Une seconde entrée du soustracteur 51 est reliée au générateur 56 de tension $V_2$. Une seconde entrée du soustracteur 52 est reliée au générateur 57 de tension $V_1$. Une sortie du soustracteur 51 est reliée à une première entrée du soustracteur 54. Une sortie du soustracteur 52 est reliée à une première entrée du multiplicateur 53. Une seconde entrée du multiplicateur 53 est reliée au générateur 58 de tension K et une sortie du multiplicateur 53 est reliée à une seconde entrée du soustracteur 54. Une sortie du soustracteur 54 est reliée à une entrée du quadripôle 55 et une sortie de ce dernier constitue la sortie du quadripôle 49 et est reliée à une entrée du diviseur 50.

La fonction de transfert du quadripôle 55 comporte un premier segment, de pente nulle, pour les valeurs négatives de son signal d'entrée, et un second segment de pente b positive et fixe, pour les valeurs positives de son signal d'entrée.

Le diviseur 50 est constitué d'un amplificateur opérationnel 66 et d'un multiplicateur analogique 67. La seconde entrée du diviseur 50 est reliée à une première entrée du multiplicateur 57. Une seconde entrée du multiplicateur 57 est reliée à une sortie de l'amplificateur opérationnel 56 et une sortie du multiplicateur 57 est reliée, d'une part, à une entrée avec inversion de l'amplificateur 56 et, d'autre part, à la borne de sortie 41 du dispositif 40 de détermination d'un coefficient de correction. Une entrée sans inversion de l'amplificateur opérationnel 56 constitue la première entrée du diviseur 50, qui est reliée à la sortie du quadripôle 49.

Dans cette variante, le seuil S et la pente *a* sont réglables solidairement en agissant sur le générateur 58 de tension variable K. La sortie du soustracteur 54 fournit un signal de valeur $Vm-V_2-K \cdot (Vm-V_1)$. Lorsque cette valeur est négative, le quadripôle 55 fournit un signal de valeur $g(Vm)$ nulle. Lorsqu'elle est positive le quadripôle 55 fournit une valeur:

$$g(Vm)=b \cdot (Vm-V_2-K \cdot (Vm-V_1))$$
$$g(Vm)=b \cdot (Vm \cdot (1-K)-V_2+K \cdot V_1)$$

Le graphe de la fonction de transfert $g(Vm)$ du quadripôle 49 est donc constitué d'un premier segment dont l'ordonnée est nulle pour les valeurs Vm telles que: $Vm-V_2-K \cdot (Vm-V_1)$ est inférieure ou égale à zéro, c'est-à-dire pour les valeurs Vm inférieures ou égales à une valeur de seuil:

$$S=\frac{V_2-K \cdot V_1}{1-K}$$

Le graphe de la fonction de transfert $g(Vm)$ comporte un second segment de pente non nulle et égale à:

$$a=b \cdot (1-K).$$

Le quadripôle 49 ainsi constitué a donc bien la fonction de transfert $g(Vm)$ représentée sur la figure 7. En faisant varier K sur une plage $K_0$, $K_2$ et il est possible de modifier simultanément la valeur de S sur une plage $S_0$, $S_2$ et la valeur de *a* sur une plage $a_0$, $a_2$.

Le graphe de la fonction $Vm-g(Vm)$ comporte donc un premier segment, de pente unitaire pour les valeurs Vm inférieures à S, et un second segment, de pente égale à: $1-b \cdot (1-K)$. Ce second segment appartient à une droite dont l'équation est:

$$Vm-g(Vm)=Vm-b \cdot (Vm \cdot (1-K)-V_2+K \cdot V_1)$$
$$Vm-g(Vm)=Vm \cdot (1-b+b \cdot K)+b \cdot V_2-b \cdot K \cdot V_1$$

Il est aisé de vérifier que pour Vm égale à $V_1$ la valeur $Vm-g(Vm)$ est égale à une valeur $V_3$ indépendante de K car les termes en K s'éliminent.

$$V_3=V_1 \cdot (1-b)+b \cdot V_2$$

Puisque la valeur $V_3=V_1-g(V_1)$ est indépendante de K, elle correspond à un point fixe du graphe de $Vm-g(Vm)$. Ce point fixe $(V_1, V_2)$ du graphe correspond au point de coordonnées $V_d$, $V_{d'}$ par lequel on souhaite faire passer le graphe. Connaissant les valeurs $V_d$ et $V_{d'}$ qui sont fixées par les caractéristiques du système de télévision, il est aisé de connaître $V_1$ et $V_3$;

$$V_1=V_d$$
$$V_3=V'_d$$

Puis la valeur $V_2$ est déduite de la valeur $V_3$ après avoir fixé la valeur b de la pente du quadripôle non-linéaire 55.

$$V_3=V_1 \cdot (1-b)+b \cdot V_2 \text{ donc } V_2=$$

$$V_2=\frac{V_3-V_1 \cdot (1-b)}{b}$$

$$V_2=\frac{V'_d-V_d \cdot (1-b)}{b}$$

La pente de b est choisie entre 0 et 1, en fonction de l'efficacité maximale que l'on veut permettre à la compression. La valeur $1-b$ fixe la pente du graphe supérieur dans la plage des valeurs élevées.

Par exemple, si b est égal à l'unité: $V_2$ est égale à $V_3$ et le segment du graphe reliant les points d'ordonnées $S_2$ et $V_d$ est un segment de pente nulle.

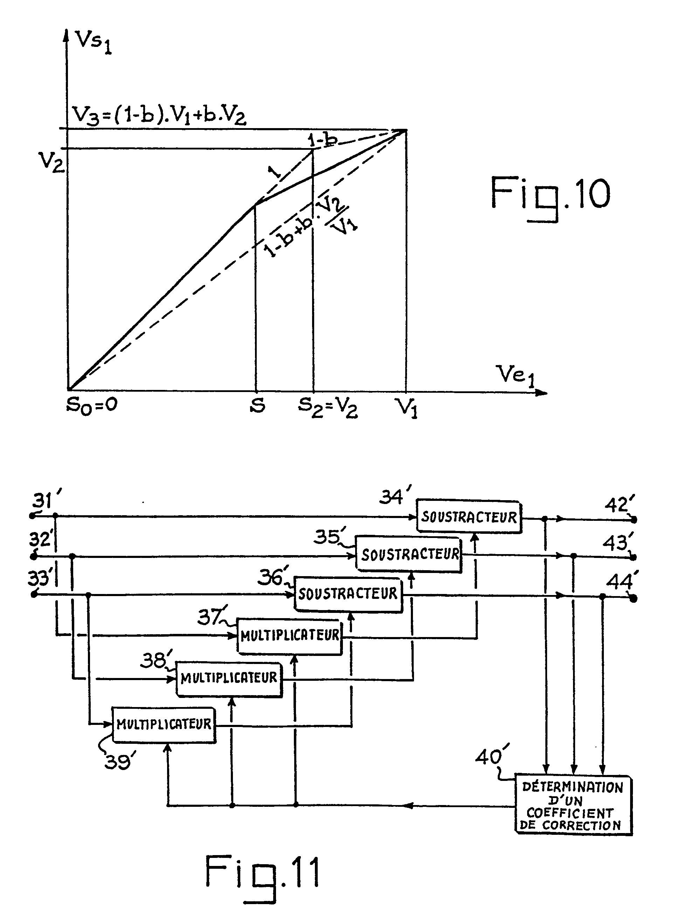

La figure 10 représente le même graphe que la figure 8, dans le cas où le signal de couleur ayant la plus grande valeur est celui ayant pour valeur $Ve_1$, en faisant apparaître les valeurs de paramètres $V_1$, $V_2$, et b pour mettre en évidence l'effet de chacun de ces paramètres. Le graphe en trait plein représente la fonction de transfert $Vs_1(Ve_1)$

du dispositif selon l'invention, pour une valeur de K fixée et comprise entre 0 et $V_2/V_1$.

Le graphe supérieur, en pointillés, correspond à la fonction de transfert obtenue pour K=0 et le graphe inférieur, en pointillés, correspond à la fonction de transfert obtenue pour $K=V_2/V_1$. Il est à remarquer que la valeur de seuil inférieure, $S_0$, est nulle dans ce cas, autrement dit la fonction de transfert ne présente plus de coude. La pente vaut alors $1-b+b \cdot V_2/V_1$. En réglant la valeur de K il est possible de déplacer le graphe de la fonction de transfert à l'intérieur de la zone définie par les deux graphes en pointillés.

Par exemple si la dynamique des signaux d'entrée est égale à 8 dB et doit être réduite en sortie à 2 dB, et si on souhaite que la compression maximale comprime une plage de 7,2 dB sur une plage de 1,2 dB, on choisit alors une valeur $V_2$ correspondant à 0,8 dB au-dessous de la valeur $V_3$. Si V est la valeur nominale de chacun des signaux de couleur, la valeur $V_1$ qui est la valeur maximale des signaux à l'entrée, est égale à $2,5 \cdot V$. La valeur $V_3$, qui est la valeur maximale admissible à la sortie, est égale à $1,25 \cdot V$. La valeur $V_2$, qui détermine le seuil S à partir duquel une compression est toujours réalisée, est égale à $1,1 \cdot V$. La relation:

$$V_3=(1-b) \cdot V_1+b \cdot V_2=(1-b) \cdot 2,5 \cdot V +b \cdot 1,1 \cdot V=1,25 \text{ V}$$

permet de déterminer la valeur de b:

$$b=\frac{1,5}{1,4}=0,89.$$

En faisant varier K entre 0 et $V_2/V_1=0,44$, il est possible de régler la compression obtenue entre la compression maximale et la compression minimale correspondant au graphe en pointillés inférieur.

La réalisation d'un quadripôle analogique 55 ne transmettant pas un signal lorsqu'il a une valeur négative et le transmettant avec un gain de 0,89 lorsqu'il a une valeur positive, est du domaine de la technique courante, et ne présente donc pas de difficultés particulières.

La figure 11 représente le schéma synoptique d'une variante du dispositif selon l'invention, comportant les mêmes éléments que le dispositif décrit précédemment, mais où un dispositif 40' de détermination d'un coefficient de correction a ses entrées reliées respectivement aux trois sorties du dispositif selon l'invention au lieu d'être reliées aux trois entrées de celui-ci. Le signal ayant la plus grande valeur à l'entrée est aussi le signal ayant la plus grande valeur à la sortie mais sa valeur est modifiée par le traitement de réduction de la dynamique. Le processus de réduction de la dynamique converge et finalement la réduction obtenue est tout à fait analogue à celle obtenue avec la variante précédente.

L'invention ne se limite pas aux exemples de réalisation décrits précédemment, de nombreuses autres variantes sont à la portée de l'homme de l'art, il est notamment possible de traiter les trois signaux de couleur au moyen de dispositifs entièrement numériques. L'invention s'applique aux traitements des signaux de télévision couleur notamment dans les studios de production de télévision.

**Revendications**

1. Dispositif pour réduire la dynamique de trois signaux de couleur représentant une image, comportant des moyens pour fournir à chaque instant un signal de correction dont la valeur est une fonction non-linéaire prédéterminée de la valeur Vm du signal de couleur ayant la plus grande valeur à l'instant considéré, et des moyens de calcul recevant le signal de correction et les trois signaux de couleur pour fournir trois signaux de couleur ayant une dynamique réduite, caractérisé en ce que les moyens de calcul comportent:

— trois multiplicateurs (37 à 39 ou 37' à 39') recevant respectivement trois signaux de couleur sur des premières entrées, recevant le signal de correction sur des secondes entrées, et fournissant respectivement trois signaux de correction de couleurs sur trois sorties;

— trois soustracteurs (34 à 36 ou 34' à 36') recevant respectivement sur trois premières entrées les signaux de couleur dont la dynamique est à réduire, recevant respectivement sur trois secondes entrées les trois signaux de correction de couleurs fournis par les multiplicateurs (37 à 39 ou 37' à 39'), et fournissant respectivement trois signaux de couleur dont la dynamique est réduite, sur trois sorties constituant des sorties du dispositif.

2. Dispositif selon la revendication 1, caractérisé en ce que les moyens (40 ou 40') pour fournir un signal de correction reçoivent trois signaux de couleur et comportent:

— des moyens (48) pour déterminer à chaque instant lequel a la plus grande valeur;

— un quadripôle non-linéaire (49) pour réduire la dynamique de ce signal en comprimant les valeurs supérieures à un seuil S;

— un diviseur (50) pour fournir le signal de correction, dont la valeur est égale au rapport de la valeur du signal dont la dynamique est réduite par le quadripôle non-linéaire (49), sur la valeur originale de ce signal à l'entrée du quadripôle (49).

3. Dispositif selon la revendication 2, caractérisé en ce que les signaux de couleur reçus par les moyens (40) pour fournir un signal de correction, sont constitués par les trois signaux de couleur dont la dynamique est à réduire.

4. Dispositif selon la revendication 3, caractérisé en ce que les signaux de couleur reçus par les moyens (40') pour fournir un signal de correction, sont constitués par les trois signaux de couleur dont la dynamique a été réduite.

5. Dispositif selon l'une des revendications 2 à 4, caractérisé en ce que le quadripôle non linéaire (49) pour réduire la dynamique du signal de couleur ayant la plus grande valeur, à un instant donné, comporte des moyens (51 à 54, 56 à 58) pour fixer en même temps la valeur de seuil S au delà de laquelle une compression est commandée entre un seuil inférieur $S_0$ et un seuil supérieur $S_2$, et le coefficient de compression, la valeur maximale de signal Vd étant inchangée.

**Patentansprüche**

1. Einrichtung zur Verminderung der Dynamik von drei ein Bild darstellenden Farbsignalen, mit Mitteln, die in jedem Augenblick ein Korrektursignal liefern, dessen Wert eine vorbestimmte nichtlineare Funktion des Wertes Vm des Farbsignals mit dem im betrachteten Augenblick größten Wert ist, und mit Rechenmitteln, welche das Korrektursignal und die drei Farbsignale empfangen und drei Farbsignale liefern, die eine verminderte Dynamik besitzen, dadurch gekennzeichnet, daß die Rechenmittel folgende Komponenten aufweisen:

— drei Multiplizierkreise (37 bis 39 oder 37' bis 39'), die je eines von drei Farbsignalen an ersten Eingängen empfangen, die das Korrektursignal an zweiten Eingängen empfangen und die je eines von drei Farbkorrektursignalen an drei Ausgängen liefern;

— drei Substrahierkreise (34 bis 36 oder 34' bis 36'), die an je einem von drei ersten Eingängen die Farbsignale empfangen, deren Dynamik zu verringern ist, die an je einem von drei zweiten Eingängen die drei von den Multiplizierkreisen (37 bis 39 oder 37' bis 39') gelieferten Farbkorrektursignale empfangen, und die an je einem von drei Ausgängen, welche die Ausgänge der Einrichtung bilden, je eines der drei Farbsignale liefern, deren Dynamik vermindert ist.

2. Einrichtung nach Anspruch 1, dadurch gekennzeichnet, daß die Mittel (40 oder 40') zur Lieferung eines Korrektursignals drei Farbsignale empfangen und folgende Komponenten aufweisen:

— Mittel (48) zur Bestimmung in jedem Augenblick, welches Signal den größten Wert besitzt;

— einen nichtlinearen Vierpol (49) zur Verringerung der Dynamik dieses Signals durch Komprimieren der oberhalb einer Schwelle S liegenden Werte;

— einen Teilerkreis (50) zur Lieferung des Korrektursignals, dessen Wert gleich dem Verhältnis zwischen dem Wert des Signals mit der durch den nichtlinearen Vierpol (49) verringerten Dynamik und dem Ursprungswert dieses Signals am Eingang des Vierpols (49) ist.

3. Einrichtung nach Anspruch 2, dadurch gekennzeichnet, daß die von den Mitteln (40) zur Lieferung eines Korrektursignals empfangenen Farbsignale aus den drei Farbsignalen bestehen, deren Dynamik zu verringern ist.

4. Einrichtung nach Anspruch 3, dadurch gekennzeichnet, daß die von den Mitteln (40') zur Lieferung eines Korrektursignals empfangenen Farbsignale aus den drei Farbsignalen bestehen, deren Dynamik verringert worden ist.

5. Einrichtung nach einem der Ansprüche 2 bis 4, dadurch gekennzeichnet, daß der nichtlineare Vierpol (49) zur Verringerung der Dynamik des Farbsignals mit dem in einem bestimmten Augenblick größten Wert Mittel (51 bis 54, 56 bis 58) aufweist, mit denen zugleich der Wert der Schwelle S, jenseits derer eine Komprimierung zwischen einer unteren Schwelle $S_0$ und einer oberen Schwelle $S_2$ ausgelöst wird, und der Kompressionskoeffizient festgesetzt wird, wobei der Maximalwert des Signals Vd unverändert bleibt.

**Claims**

1. A device for reducing the dynamic range of three colour signals representing a picture, comprising means for delivering at any moment a correction signal, whose value is a predetermined non-linear function of the value Vm of the colour signal having the highest value at the considered instant, and calculation means adapted to receive the correction signal and the three colour signals and to provide three colour signals with a reduced dynamic range, characterized in that the calculation means comprise:
— three multipliers (37 to 39 or 37' to 39') adapted to receive respectively three colour signals on first inputs, to receive the correction signal on second inputs, and to deliver respectively three colour correction signals at three outputs;
— three subtractors (34 to 36 or 34' to 36') adapted to receive respectively on three first inputs the colour signals, whose dynamic range is to be reduced, to receive respectively on three second inputs the three colour correction signals delivered by the multipliers (37 to 39 or 37' to 39'), and to deliver respectively three colour signals, whose dynamic range is to be reduced, at three outputs constituting the outputs of the device.

2. A device according to claim 1, characterized in that the means (40 or 40') for providing a correction signal receive three colour signals and comprise:
— means (48) for determining at any moment, which signal has the highest value;
— a non-linear quadrupole (49) for reducing the dynamic range of said signal by compression of the values exceeding a threshold S;
— a divider (50) for providing a correction signal, whose value is equal to the ratio between the value of the signal whose dynamic range is reduced by the non-linear quadrupole (49), and the original value of this signal at the input of the quadrupole (49).

3. A device according to claim 2, characterized in that the colour signals received by the means (40) for providing a correction signal are constituted by three colour signals, whose dynamic range is to be reduced.

4. A device according to claim 3, characterized in that the colour signals received by the means (40') for providing a correction signal are constituted by three colour signals, whose dynamic range has been reduced.

5. A device according to any one of the claims 2 to 4, characterized in that the non-linear quadrupole (49) for reducing the dynamic range of the colour signal having the highest value at any given instant comprises means (51 to 54, 56 to 58) adapted to fix simultaneously the value of the threshold S, beyond which a compression is performed between a lower threshold $S_0$ and an upper threshold $S_2$, and the coefficient of compression, with the maximum value of the signal Vd remaining unchanged.

$$Vs_1 = Ve_1 \times k(Ve_1)$$

$$Vs_2 = Ve_2 \times k(Ve_2)$$

$$Vs_3 = Ve_3 \times k(Ve_3)$$

Fig.1

$$Vs_1 = Ve_1 \times c(V_m)$$

$$Vs_2 = Ve_2 \times c(V_m)$$

$$Vs_3 = Ve_3 \times c(V_m)$$

Fig.2

EP 0 192 497 B1

Fig.3

Fig.4

Fig.5

2

**DÉTERMINATION DE LA PLUS GRANDE VALEUR** — 48

**QUADRIPÔLE NON LINÉAIRE** — 49

**DIVISEUR** — 50

$V_m$

$g(V_m)$

$h(V_m) = \dfrac{g(V_m)}{V_m}$

40

Fig.6

Fig.7

Fig.8

3

Fig.9

$$V_3 = (1-b).V_1 + b.V_2$$

Fig.10

Fig.11